# EUROPÄISCHE PATENTSCHRIFT

(11) **EP 4 377 229 B1**
(45) Veröffentlichungstag und Bekanntmachung des Hinweises auf die Patenterteilung: **10.09.2025**
(21) Anmeldenummer: 22761428.6
(22) Anmeldetag: 01.08.2022
(51) Int. Cl.: B65D 85/804

(54) **PORTIONSKAPSEL ZUR ZUBEREITUNG EINES GETRÄNKS**
CAPSULE FOR THE PREPARATION OF BEVERAGES
CAPSULE POUR LA PRÉPARATION DES BOISSONS

(30) Priorität: 30.07.2021 US 202163227708 P; 12.08.2021 DE 102021208857
(43) Veröffentlichungstag der Anmeldung: 05.06.2024
(60) Teilanmeldung: 25176714.1
(73) Patentinhaber: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner
(86) Internationale Anmeldenummer: PCT/EP2022/071508
(87) Internationale Veröffentlichungsnummer: WO 2023/007026

(56) Entgegenhaltungen:
- WO-A1-2013/072239
- WO-A1-2015/055849
- GB-A- 2 523 775

## Beschreibung

### Stand der Technik

Die vorliegende Erfindung geht aus von einer Portionskapsel zur Zubereitung eines Getränks mit Hilfe einer Getränkeherstellungsmaschine, wobei die Portionskapsel ein Basiselement mit einem Hohlraum zum Aufnehmen eines Getränkerohmaterials und einen den Hohlraum verschließenden Kapseldeckel aufweist, wobei das Basiselement einen Kapselboden, einen umlaufenden Flansch und eine sich von dem Kapselboden zum umlaufenden Flansch erstreckende Kapselwandung umfasst, wobei der Kapseldeckel an dem Flansch befestigt ist, wobei die Portionskapsel ein insbesondere von einem Detektor der Getränkeherstellungsmaschine optisch detektierbares Merkmal aufweist.

Solche Portionskapseln sind aus dem Stand der Technik bekannt. Beispielsweise offenbart die Druckschrift WO 2016 / 186 488 A1 und eine solche gattungsgemäße Portionskapsel. Diese Portionskapsel ist dazu vorgesehen, in eine Brühkammer eingelegt zu werden, in welcher die Portionskapsel perforiert wird, um Brühflüssigkeit in Form heißen Wassers unter Druck in den Hohlraum einzuleiten. Durch Wechselwirkung zwischen dem eingeleiteten Wasser mit dem Getränkerohmaterial, insbesondere geröstetem und gemahlenem Kaffee, entsteht ein Getränk, welches die Portionskapsel durch weitere Perforationsstellen verlässt und in ein Gefäß gelangt.

Für jede Portionskapsel existiert in der Regel eine passende Getränkeherstellungsmaschine, welche zur Zubereitung von Getränken auf Grundlage der passenden Portionskapseln optimiert ist. Zur Vermeidung von Fehlfunktionen hat es sich bewährt, derartige Portionskapsel mit maschinell und optisch auslesbaren detektierbaren Merkmalen zu versehen, damit vor dem Beginn des Brühprozesses eine Prüfung stattfinden kann, ob die eingelegte Portionskapsel mit der Maschine kompatibel ist. Zudem kann ggf. ein passendes Brühprogramm für das in der Portionskapsel befindliche Getränkerohmaterial gestartet werden.

Aus den Druckschriften WO2013/072239 A1, EP 3 023 362 B1, WO 2020 / 201 487 A1 und US 10,800,600 B2 ist bekannt, solche optische detektierbaren Merkmale in Form von Barcodes oder Binärcodes auf den Flansch der Kapsel aufzudrucken.

### Offenbarung der Erfindung

Es ist eine Aufgabe der vorliegenden Erfindung eine Portionskapsel mit einem optisch detektierbaren Merkmal (im Nachfolgenden auch nur als Merkmal bezeichnet) eingangs genannter Art zur Verfügung zu stellen, welche eine Verbesserung gegenüber den aus dem zitierten Stand der Technik bekannten Lösungen darstellt. Insbesondere soll die Auslesezuverlässigkeit beim Auslesen des detektierbaren Merkmals durch den Detektor der Getränkeherstellungsmaschine erhöht werden, sowie die Empfindlichkeit des detektierbaren Merkmals gegen Beschädigungen (Zerkratzen) aufgrund äußerer Krafteinwirkungen während des Transports oder der Lagerung der Portionskapseln reduziert werden. Angestrebt wird ferner, eine Senkung der Herstellungskosten, der Herstellungszeit und/oder des Gewichts der Portionskapsel.

Die Aufgabe der vorliegenden Erfindung wird gelöst mit einer Portionskapsel nach Anspruch 1.

Vorteilhafte Ausgestaltungen und Weiterbildungen der Erfindung sind den Unteransprüchen, sowie der folgenden Beschreibung unter Bezugnahme auf die Zeichnungen entnehmbar.

Es wird eine erfindungsgemäße Portionskapsel zur Zubereitung eines Getränks mit Hilfe einer Getränkeherstellungsmaschine offenbart, wobei die Portionskapsel ein Basiselement mit einem Hohlraum zum Aufnehmen eines Getränkerohmaterials und einen den Hohlraum verschließenden Kapseldeckel aufweist, wobei das Basiselement einen Kapselboden, einen umlaufenden Flansch und eine sich von dem Kapselboden zum umlaufenden Flansch erstreckende Kapselwandung umfasst, wobei der Kapseldeckel an dem Flansch befestigt ist, wobei die Portionskapsel ein insbesondere von einem Detektor der Getränkeherstellungsmaschine optisch detektierbares Merkmal aufweist, welches an einer dem Kapseldeckel abgewandten Seite des Flansches angeordnet ist, dadurch gekennzeichnet, dass die Portionskapsel weiteres Basiselement (12') aufweist, welches das Basiselement zumindest teilweise umgibt. Vorteilhafterweise kann das weitere Basiselement (auch als äußeres Basiselement bezeichnet) als form- oder strukturgebendes Basisteil ausgebildet werden, während das Basiselement (auch als inneres Basiselement bezeichnet), welches den Flansch mit dem optisch detektierbaren Merkmal aufweist, mit Blick auf ein günstiges Herstellungsverfahren optimiert werden kann. Im Ergebnis lässt sich somit das optisch detektierbare Merkmal besonders kostengünstig aufdrucken oder implementieren. Das innere Basiselement kann beispielsweise wesentlich weniger formstabil (zumindest im Bereich der Kapselwandung oder des Kapselbodens) als das äußere Basiselement ausgebildet werden oder optional mit Blick auf einen Zusatzfunktion, wie beispielsweise Aromadichtheit optimiert werden. Dadurch, dass sich die Kapselwandungen überdecken, ist eine einfache Montage und Befestigung der beiden Basiselement aneinander möglich. Die nachfolgenden Ausführungen zu bevorzugten Weiterbildungen dieser Portionskapsel gelten optional auch für alle anderen in dieser Beschreibung offenbarten Portionskapseln.

Vorzugsweise ist vorgehen, dass das weitere Basiselement (12') einen weiteren Hohlraum (20') aufweist, in welchem das Basiselement teilweise angeordnet ist.

Vorzugsweise ist vorgehen, dass das Basiselement so weit innerhalb des weiteren Hohlraums (20') angeordnet ist, dass sich eine weitere Kapselwandung (14') des weiteren Basiselements (12') insbesondere parallel zur Kapselwandung des Basiselements bis zum Flansch erstreckt.

Vorzugsweise ist vorgehen, dass das weitere Basiselement (12') flanschfrei ausgebildet ist.

Vorzugsweise ist vorgehen, dass das Material im Bereich der Kapselwandung des Basiselements weicher, weniger steif oder dünner als im Bereich der Kapselwandung (14') von dem weiteren Basiselement (12') ausgebildet ist.

Vorzugsweise ist vorgehen, dass das Material des Basiselements gasundurchlässiger als das Material des weiteren Basiselements (12') ausgebildet ist.

Vorzugsweise ist vorgehen, dass das Basiselement und das weitere Basiselement (12') im Bereich der Kapselwandungen flächig miteinander verklebt oder verschweißt sind.

Vorzugsweise ist vorgehen, dass das Basiselement und das weitere Basiselement (12') aus den gleichen oder unterschiedlichen Materialien gefertigt sind.

Vorzugsweise ist vorgehen, dass das optisch detektierbare Merkmal ein maschinenauslesbarer Code, vorzugsweise ein eindimensionaler oder mehrdimensionaler Bit- oder Barcode ist.

Ein weiterer Gegenstand der vorliegenden Erfindung ist die Verwendung der oben genannten erfindungsgemäßen Portionskapseln zur Zubereitung eines Getränks mit Hilfe einer Getränkeherstellungsmaschine.

Die vorstehenden Ausführungen zu verschiedenen Portionskapsel sind selbstverständlich auch in Kombination miteinander zu verstehen.

Gemäß einer bevorzugten Ausführungsform der vorliegenden Erfindung ist vorgesehen, dass das Basiselement einstückig aus Aluminium und/oder Kunststoff gefertigt ist. Vorzugsweise wird das Basiselement durch Kalt- oder Warmverformung, insbesondere Tiefziehen hergestellt. Die Ausgestaltung des Basiselements mit Hohlraum wird vorzugsweise durch Thermoformen, beispielsweise Tiefziehen mittels Unterdruck, Überdruck und/oder einem beweglichen Stempel, erzeugt. Das Basiselement ist vorzugsweise als tiefgezogenes Aluminiumteil ausgebildet. Alternativ wäre aber auch denkbar, dass das Basiselement aus Polyethylen (PE), Polypropylen (PP), Polyvinylchlorid (PVC) oder Polyethylenterephthalat (PET) ausgebildet ist. Alternativ wird die Portionskapsel mittels Spritzgussverfahren, insbesondere im Einkomponenten-, Mehrkomponenten- oder In-Mold-Verfahren, hergestellt.

Das Basiselement ist bevorzugt kegelstumpfförmig, kegelfrömig, zylinderförmig, sphärisch, hemisphärisch, elliptisch oder teilelliptisch ausgebildet. Das Basiselement ist vorzugsweise starr oder halbstarr ausgebildet. Der durch das Basiselement gebildete Hohlraum dient der Aufnahme von Getränkerohmaterial, beispielsweise Kaffeeröstgranulat, Instantkaffee, Schokoladenpulver, Teeverschnitt, Milchpulver und/oder dergleichen. Die Deckelfolie ist insbesondere plan oder nahezu plan ausgebildet, zumindest unmittelbar nach Verschließen der abgefüllten Portionskapsel durch die Deckelfolie. Etwaige Bombierungen der Deckelfolie im Laufe der Zeit durch ein Ausgasen von Kaffeepulver führen nicht dazu, dass die Deckelfolie nicht plan im Sinne der vorliegenden Erfindung ist, da diese Bombierung typischerweise erst nach einiger Zeit nach Abfüllung der Portionskapsel auftreten.

Die Deckelfolie umfasst vorzugsweise eine Aluminiumfolie oder eine Kunststoff-AluminiumVerbundfolie oder eine Kunststofffolie oder eine Mehrschicht-Kunststofffolie. Denkbar ist, dass die Portionskapsel rotationssymmetrisch um ihre Längsachse ausgebildet ist. Die Längsachse bilden somit eine zentral Rotationssymmetrieachse, welche mittig durch die Portionskapsel und dabei insbesondere im Wesentlichen senkrecht zu einer Haupterstreckungsebene der Deckelfolie verläuft. Der Flansch des Basiselements verläuft bevorzugt in einem Winkel zwischen 70 bis 110 Grad, besonders bevorzugt von 80 bis 100 Grad und ganz besonders bevorzugt von im Wesentlichen 90 Grad zur Rotationssymmetrieachse. Der Flansch ist insbesondere geschlossen, umlaufend ausgebildet. Das freie, äußere Ende des Flansches weist vorzugsweise einen Wulst, eine Bördelung oder einen sogenannten Rollrand auf, um Verletzungen des Benutzers an dem scharfkantigen Ende zu vermeiden.

Die Portionskapsel kann eine oder mehrere Getränkesubstanzen enthalten. Bei der einen oder den mehreren Getränkesubstanzen kann es sich um eine Flüssigkeit, einen Sirup, einen Feststoff, ein Pulver, Kaffee- oder Kakaosatz, Teeblätter oder eine Kombination davon handeln. Die eine oder die mehreren Getränkesubstanzen können in einer Getränkeherstellungsmaschine und/oder einem Getränkesystem verdünnt oder extrahiert werden, um ein Getränk herzustellen.

Die Portionskapsel kann jedes der hier beschriebenen und/oder abgebildeten optisch detektierbaren Merkmale und/oder Elemente umfassen. Jedes der hierin beschriebenen Merkmale und/oder Elemente kann zur Herstellung einer Portionskapsel kombiniert werden. Jedes der hierin beschriebenen Merkmale und/oder Elemente kann dupliziert werden, um eine Portionskapsel herzustellen. Jedes der hierin beschriebenen Merkmale und/oder Elemente kann eliminiert oder weggelassen werden, um eine Portionskapsel herzustellen. Jedes der hierin offenbarten Merkmale kann auf jedem der hierin aufgeführten Elemente oder Oberflächen neu angeordnet werden. Zum Beispiel kann ein Merkmal oder Element, das als auf dem Flansch der Portionskapsel befindlich angegeben ist, auch oder stattdessen auf dem Deckel oder dem Basiselement angeordnet sein.

Die Portionskapsel kann einen Körper oder ein Basiselement haben. Der Körper oder das Basiselement kann ein Behältnis sein oder einen oder mehrere Hohlräume bilden, in denen die Getränkesubstanz und/oder ein oder mehrere Elemente aufgenommen und/oder gelagert werden. Der Körper oder das Basiselement kann eine Seitenwand mit abgerundeten, gewölbten oder halbkugelförmigen Oberflächen aufweisen. Der Körper oder das Basiselement kann eine Seitenwand mit geradlinigen, ebenen oder sich verjüngenden Flächen aufweisen. Der Körper oder das Basiselement kann eine Seitenwand mit Oberflächen haben, die eine Halbkugel, eine Kuppel, einen Kegel oder einen Kegelstumpf bilden. Das Basiselement kann eine Bodenfläche haben. Die Bodenfläche kann abgerundet sein oder eine Halbkugelform haben. Die Bodenfläche kann allgemein flach oder plan sein. Die Bodenfläche kann eine oder mehrere Einbuchtungen aufweisen. Weist der Boden mehr als eine Vertiefung auf, können die beiden oder mehr Vertiefungen konzentrisch sein oder ineinander liegen. Die Bodenfläche kann gegenüber der Seitenwand abgewinkelt oder geneigt sein.

Die Portionskapsel kann einen Flansch haben. Der Flansch und das Basiselement können aus einem oder mehreren integralen Materialien bestehen. Der Flansch und das Basiselement können aus einem oder mehreren separaten Materialien gebildet und dann durch einen Fügeprozess miteinander verbunden werden. Beispielsweise können der Flansch und das Basiselement mit einem Klebstoff, einer Dichtung oder einer anderen geeigneten Verbindungsmethode verbunden werden. Der Flansch kann aus demselben Material bestehen wie das Basiselement und/oder der Deckel. Der Flansch kann aus einem anderen Material bestehen als das Basiselement und/oder der Deckel. Der Flansch kann eine ringförmige Form haben, die sich zumindest teilweise um den gesamten Umfang des Basiselements erstreckt. In bestimmten Ausführungsformen kann sich der Flansch jedoch auch nur um einen Teil des Umfangs des Basiselements erstrecken. In einigen Fällen kann der Flansch aus zwei oder mehr Laschen bestehen, die sich von dem Basiselement aus erstrecken. Der Flansch kann sich von dem Basiselement oder der Seitenwand des Basiselements nach außen erstrecken oder hervorstehen. Der Flansch kann sich in einem Winkel vom Basiselement aus erstrecken, so dass ein Winkel zwischen der oberen Fläche des Flansches und der Seitenwand der Kapsel ein spitzer Winkel (weniger als 90 Grad) ist. Der Flansch kann sich in einem Winkel vom Basiselement aus erstrecken, so dass ein Winkel zwischen der Oberseite des Flansches und der Seitenwand der Kapsel ein stumpfer Winkel (weniger als 90 Grad) ist. Der Flansch kann sich in einem Winkel vom Basiselement aus erstrecken, so dass ein Winkel zwischen der Oberseite des Flansches und der Seitenwand der Kapsel etwa ein rechter Winkel (etwa 90 Grad) ist.

Der Flansch kann sich an der Oberseite des Basiselements befinden. Der Flansch kann sich an der Unterseite des Basiselements befinden. Der Flansch kann sich in einem Bereich zwischen der unteren Oberfläche und der unteren Oberfläche des Basiselements befinden. Der Flansch kann sich näher an der Oberseite als an der Unterseite des Basiselements befinden oder umgekehrt.

Die Portionskapsel kann mit einem Deckel (auch als Kapseldeckel bezeichnet) versehen sein. Der Deckel kann den Hohlraum oder das Basiselement verschließen oder abdichten, nachdem die Getränkezutat hinzugefügt oder in den Hohlraum eingebracht wurde. Der Deckel kann eine luftdichte oder hermetische Abdichtung erzeugen, um die Frische der Getränkezutat zu erhalten.

Der Deckel kann eine nicht luftdichte oder nicht hermetische Abdichtung bewirken. Der Deckel kann eine Dichtung erzeugen, so dass Luft und Feuchtigkeit daran gehindert werden, in den Hohlraum oder die Kapsel einzudringen und/oder sie zu verlassen. Der Deckel kann an der Portionskapsel, am Basiselement, an der Oberseite des Basiselements, an der Unterseite des Basiselements, am Flansch, an der Oberseite des Flansches, an der Unterseite des Flansches oder an einer Kombination davon befestigt werden. Der Deckel kann durch Kleben, Schweißen oder eine andere geeignete Befestigungsmethode oder -vorrichtung angebracht werden. Der Deckel kann aus dem gleichen Material wie das Basiselement und/oder der Flansch bestehen. Der Deckel kann aus einem anderen Material als das Basiselement und/oder der Flansch hergestellt sein. Der Deckel, der Flansch und/oder das Basiselement können aus einem oder mehreren integralen Materialien bestehen. Der Deckel, der Flansch und/oder das Basiselement können aus einem oder mehreren separaten Materialien bestehen und dann durch einen Fügeprozess miteinander verbunden werden. Zum Beispiel können der Deckel, der Flansch und/oder das Basiselement mit einem Klebstoff, einer Dichtung, einem Schweißverfahren oder einer anderen geeigneten Verbindungsmethode verbunden werden.

Die Portionskapsel, der Körper oder das Basiselement, der Flansch und/oder der Deckel können aus einem Material bestehen, das für die Herstellung eines Getränks und/oder für die Lagerung von Zutaten für die Getränkeherstellung geeignet ist. Die Portionskapsel, das Basiselement, der Flansch und/oder der Deckel können aus einem Metall hergestellt sein. Die Portionskapsel, das Basiselement, der Flansch und/oder der Deckel können aus einem Nicht-Metall bestehen. Die Portionskapsel, das Basiselement, der Flansch und/oder der Deckel können aus einem recycelten Material hergestellt sein. Die Portionskapsel, das Basiselement, der Flansch und/oder der Deckel können aus einem wiederverwertbaren Material hergestellt sein. Die Portionskapsel, das Basiselement, der Flansch und/oder der Deckel können aus einem biologisch abbaubaren Material hergestellt sein. Die Portionskapsel, das Basiselement, der Flansch und/oder der Deckel können aus einem Papiermaterial hergestellt sein. Die Portionskapsel, das Basiselement, der Flansch und/oder der Deckel können aus einem kompostierbaren Material hergestellt sein. Die Portionskapsel, das Basiselement, der Flansch und/oder der Deckel können aus einem zellulosehaltigen Material hergestellt sein. Die Portionskapsel, das Basiselement, der Flansch und/oder der Deckel können aus einem Material hergestellt sein, das Polymilchsäure enthält. Die Portionskapsel, das Basiselement, der Flansch und/oder der Deckel können aus einem Material hergestellt sein, das der Verformung, der Auflösung und dem Zusammenbruch bei Temperaturen bis zu mindestens 120 °C oder mehr oder weniger standhält. Die Portionskapsel, das Basiselement, der Flansch und/oder der Deckel können aus einem Material hergestellt sein, das aus Mais gewonnen wird. Die Portionskapsel, das Basiselement, der Flansch und/oder der Deckel können aus einem Material auf Pflanzenbasis hergestellt sein. Die Portionskapsel, das Basiselement, der Flansch und/oder der Deckel können aus einem Material hergestellt sein, das frei von Polystyrol ist. Die Portionskapsel, das Basiselement, der Flansch und/oder der Deckel können aus einem Material hergestellt sein, das lebensmittelecht ist. Die Portionskapsel, das Basiselement, der Flansch und/oder der Deckel können durch Spritzgießen, Thermoformen, Ziehen oder dergleichen hergestellt werden. Das Basiselement, der Flansch und/oder der Deckel können laminiert sein. Die Portionskapsel, das Basiselement, der Flansch und/oder der Deckel können aus einem elektrisch leitfähigen Material hergestellt sein. Die Portionskapsel, das Basiselement, der Flansch und/oder der Deckel können aus einem elektrisch nicht leitenden Material hergestellt sein. Die Portionskapsel, das Basiselement, der Flansch und/oder der Deckel können aus einem Gewebematerial hergestellt sein. Die Portionskapsel, das Basiselement, der Flansch und/oder der Deckel können aus einem Gummimaterial hergestellt sein. Die Portionskapsel, das Basiselement, der Flansch und/oder der Deckel können aus einem Kunststoffmaterial hergestellt sein. Die Portionskapsel, das Basiselement, der Flansch und/oder der Deckel können aus Aluminium hergestellt sein. Die Portionskapsel, das Basiselement, der Flansch und/oder der Deckel können aus einem Material bestehen, das elastisch oder verformbar ist. Das Basiselement, der Flansch und/oder der Deckel können aus einem verformbaren Material bestehen, das verschiedenen Flüssigkeitstemperaturen (heiß und kalt) und -drücken standhalten kann, ohne Schaden zu nehmen (d. h. ohne dass das Basiselement, der Flansch und/oder der Deckel in unerwünschten Bereichen reißt oder bricht). Die Portionskapsel, das Basiselement, der Flansch und/oder der Deckel können eine im Allgemeinen gleiche Wandstärke haben. Die Portionskapsel, das Basiselement, der Flansch und/oder der Deckel können eine unterschiedliche Wandstärke haben. Zum Beispiel kann die Portionskapsel, das Basiselement, der Flansch und/oder der Deckel in bestimmten Bereichen eine dickere Wandstärke aufweisen, um eine Zerstörung der Portionskapsel während der Handhabung und/oder des Gebrauchs zu verhindern.

Die Portionskapsel kann ein oder mehrere Kapselmerkmale aufweisen. Bei dem einen oder den mehreren Kapselmerkmalen kann es sich um einen oder mehrere Vorsprünge, Grate, Erhebungen und/oder Konvexitäten handeln, die sich von der Außenfläche des Basiselements weg erstrecken oder über diese hinausragen. Bei dem einen oder den Kapselmerkmalen kann es sich um einen oder mehrere Kanäle, Rillen, Vertiefungen, Täler oder Konkavitäten handeln, die sich von der Außenfläche in das Basiselement hinein erstrecken oder vorstehen. Das eine oder die mehreren Kapselmerkmale können sich um den gesamten Umfang des Körpers oder des Basiselements erstrecken. Das eine oder die mehreren Kapselmerkmale können sich auch nur um einen Teil oder einen Bereich des Umfangs des Körpers oder des Basiselements erstrecken. Das eine oder die mehreren Oberflächenkapselmerkmale können sich kontinuierlich um den Körper oder das Basiselement herum erstrecken. Das eine oder die mehreren Kapselmerkmale können sich intermittierend (Anfang und Ende) um den Körper oder das Basiselement herum erstrecken. Das eine oder die mehreren Kapselmerkmale können sich nur auf dem Basiselement befinden. Das eine oder die mehreren Kapselmerkmale können sich nur auf dem Deckel befinden. Das eine oder die mehreren Kapselmerkmale können nur auf dem Flansch angeordnet sein. Das eine oder die mehreren Kapselmerkmale können sich nicht auf dem Körper, dem Flansch, dem Deckel oder einer Kombination davon befinden. Das eine oder die mehreren Kapselmerkmale können sich auf der Innenfläche des Basiselements befinden. Das eine oder die mehreren Kapselmerkmale können auf der Außenfläche des Grundelements angeordnet sein. Das eine oder die mehreren Kapselmerkmale können auf der Oberseite des Flansches, der Unterseite des Flansches, der Seitenfläche des Flansches oder einer Kombination davon angeordnet sein. Bei dem einen oder den mehreren Kapselmerkmalen kann es sich um einen oder mehrere Ringe handeln, die sich um den gesamten oder einen Teil des Umfangs der Portionskapsel erstrecken. Das eine oder die mehreren Merkmale der Portionskapsel können diagonal sein oder sich in einer Diagonale oder einem Winkel relativ zu einer zentralen Längsachse der Portionskapsel erstrecken. Die ein oder mehreren Kapselmerkmale können unregelmäßige Formen, wie Schnörkel oder Wirbel, aufweisen. Das eine oder die mehreren Kapselmerkmale können vertikal ausgerichtet sein (von der Oberseite zur Unterseite des Basiselements). Das eine oder die mehreren Kapselmerkmale können sich auf den Flansch erstrecken (Oberseite, Unterseite und/oder Seitenfläche des Flansches). Das eine oder die mehreren Kapselmerkmale können sich nicht auf den Flansch erstrecken. Das eine oder die mehreren Kapselmerkmale können sich vom Flansch bis zur Bodenfläche des Basiselements erstrecken. Das eine oder die mehreren Kapselmerkmale können sich von dem Flansch in Richtung der Bodenfläche des Basiselements erstrecken, dürfen sich aber nicht bis zur Bodenfläche erstrecken. Das eine oder die mehreren Kapselmerkmale können sich von der unteren Oberfläche des Basiselements zur oberen Oberfläche des Basiselements erstrecken, dürfen sich aber nicht bis zur oberen Oberfläche erstrecken. Der Abstand zwischen benachbarten Kapselmerkmalen kann gleichmäßig sein. Mit anderen Worten, der Abstand zwischen einigen oder allen Kapselmerkmalen kann im Wesentlichen gleich sein. Die Abstände zwischen benachbarten Kapselmerkmalen können unterschiedlich sein. Mit anderen Worten, der Abstand zwischen einigen oder allen Kapselmerkmalen kann unterschiedlich sein. Das eine oder die mehreren Kapselmerkmale können eine Zebraform oder einen Zebraaufdruck haben.

Dies kann bedeuten, dass sich das eine oder die mehreren Kapselmerkmale entlang mindestens eines Teils (oder der Gesamtheit) des Körpers oder des Basiselements, des Deckels und/oder des Flansches erstrecken. Das eine oder die mehreren Kapselmerkmale können in bestimmten Bereichen verblassen oder weniger sichtbar sein, während sie in anderen Bereichen intensiver oder besser sichtbar sind. Zum Beispiel kann sich die Sichtbarkeit des einen oder der mehreren Kapselmerkmale ändern. Zum Beispiel kann die Tiefe einer Vertiefung oder Rille in bestimmten Bereichen des Basiselements, des Deckels und/oder des Flansches flacher oder tiefer werden. Zum Beispiel kann die Höhe oder der Vorsprung einer Rippe oder eines Grates in bestimmten Bereichen des Basiselements, des Flansches und/oder des Deckels größer oder kleiner sein als in anderen Bereichen des Basiselements, des Flansches und/oder des Deckels.

Das eine oder die mehreren Kapselmerkmale können sich nur an der Außenfläche der Seitenwand oder des Körpers befinden. Das eine oder die mehreren Kapselmerkmale können sich nur auf der Innenfläche der Seitenwand oder des Körpers befinden. Das eine oder die mehreren Kapselmerkmale können sich sowohl an der Innen- als auch an der Außenfläche der Seitenwand oder des Körpers befinden. Das eine oder die mehreren Kapselmerkmale, die sich auf der Außenfläche befinden, können dem einen oder den mehreren Kapselmerkmalen entsprechen, die sich auf der Innenfläche des Kapselkörpers befinden. Zum Beispiel kann eine Rille auf der Außenfläche des Kapselkörpers eine Rippe oder einen Vorsprung auf der Innenfläche der Seitenwand bilden, oder andersherum. Zum Beispiel kann eine Rille auf der Oberseite des Flansches oder Deckels eine Rippe oder einen Vorsprung auf der Unterseite des Flansches oder Deckels bilden, oder umgekehrt.

Die ein oder mehreren Kapselmerkmale, die sich auf einer Innenfläche oder im Inneren des Hohlraums befinden, können dazu dienen, den Flüssigkeitsstrom des Getränks in und/oder durch das Basiselement zu verändern oder zu unterbrechen. Das eine oder die mehreren Kapselmerkmale können dazu dienen, eine turbulente Flüssigkeitsströmung in und/oder durch die Kapsel zu bewirken oder zu erzeugen. Das eine oder die mehreren Kapselmerkmale können dazu dienen, eine laminare Flüssigkeitsströmung in und/oder durch die Kapsel hervorzurufen oder zu erzeugen. Das eine oder die mehreren Kapselmerkmale können dazu dienen, einen Wirbel der Flüssigkeit in und/oder durch die Kapsel zu erzeugen. Das eine oder die mehreren Kapselmerkmale können bewirken, dass sich die in die und durch die Kapsel fließende Flüssigkeit nach oben und/oder unten bewegt, um den Getränkebestandteil in der Kapsel zu extrahieren und/oder aufzulösen.

Die Portionskapsel kann mit einer Tinte beschichtet werden, mit einem Material, das der Portionskapsel ein metallisches Aussehen verleiht, das aus einer Tinte oder metallischen Flocken oder metallischen Partikeln oder Pigmenten hergestellt werden kann. Die Partikel können in einem wässrigen Medium suspendiert oder dispergiert werden und dann auf das Basiselement, den Deckel und/oder den Flansch aufgebracht werden. Es ist möglich, dass die Partikel oder Pigmente in den Kunststoff eingebracht werden, wenn sich der Kunststoff in einem geschmolzenen oder erweichten Zustand befindet, um das Metallische bereitzustellen. Beispielsweise kann dem Kunststoff ein Aluminiumflockenmaterial hinzugefügt werden, um ihm ein einzigartiges Aussehen zu verleihen und/oder um Herstellungswirbel oder Defekte zu verbergen, die infolge von

Das eine oder die mehreren Kapselmerkmale können integral auf dem Kapselkörper oder der Basis, dem Deckel und/oder dem Flansch ausgebildet sein. Das eine oder die mehreren Kapselmerkmale können dem Kapselkörper oder der Basis, dem Deckel und/oder dem Flansch hinzugefügt werden. Die ein oder mehreren Kapselmerkmale können auf den Kapselkörper oder die Basis, den Deckel und/oder den Flansch aufgedruckt oder angebracht sein. Das eine oder die mehreren Kapselmerkmale können aus demselben Material wie der Kapselkörper, der Flansch und/oder der Deckel geformt oder hergestellt sein. Das eine oder die mehreren Kapselmerkmale können aus einem anderen Material als der Kapselkörper, der Flansch und/oder der Deckel geformt oder hergestellt sein. Das eine oder die mehreren Kapselmerkmale können auf den Kapselkörper, den Flansch und/oder den Deckel gedruckt, geprägt, geätzt, aufgeklebt oder angebracht werden.

Die ein oder mehreren Kapselmerkmale können geklebt, geschweißt oder auf andere Weise an der Kapselbasis befestigt werden.

Bei dem einen oder den mehreren Kapselmerkmalen kann es sich auch um das eine oder die mehreren optisch erkennbaren Merkmale handeln. In dieser Hinsicht können das eine oder die mehreren Kapselmerkmale einem oder mehreren hierin offengelegten Zwecken oder Funktionen dienen. Alternativ können die ein oder mehreren Kapselmerkmale nur die Funktion oder den Zweck eines optisch erkennbaren Merkmals erfüllen.

Die Portionskapsel kann ein oder mehrere optisch erkennbare Merkmale aufweisen. Das eine oder die mehreren optisch detektierbaren Merkmale können sich auf der Portionskapsel, dem Körper oder Basiselement, der Seitenwand, der Außenfläche der Seitenwand, der Innenfläche der Seitenwand, dem Flansch, der Oberseite des Flansches, der Unterseite des Flansches, der Seitenfläche des Flansches, dem Deckel, der Oberseite des Deckels, der Unterseite des Deckels, der Seitenfläche des Deckels oder einer Kombination davon befinden.

Die ein oder mehreren optisch detektierbaren Merkmale können von einem oder mehreren Detektoren der Getränkemaschine und/oder des Systems gelesen, detektiert, erkannt und/oder identifiziert werden. Bei dem einen oder den mehreren Detektoren kann es sich um einen oder mehrere Laser, Lichter, Lichtvorhänge, Scanner, Leser, Augen, Kameras, Strichcodeleser, Bitcodeleser oder eine Kombination davon handeln. Nachdem die Portionskapsel in die Getränkemaschine eingeführt wurde, können der eine oder die mehreren Detektoren über der Portionskapsel, unter der Portionskapsel, neben der Portionskapsel oder einer Kombination davon angeordnet sein. Der eine oder die mehreren Detektoren können einen oder mehrere Prozessoren, Speicher, Programme, Festplatten, Ram oder andere Computerhardware und - software enthalten oder mit diesen in elektronischer Verbindung stehen. Der eine oder die mehreren Detektoren können so funktionieren, dass sie das eine oder die mehreren optisch erkennbaren Merkmale lesen, identifizieren und/oder mit einer oder mehreren gespeicherten Referenzen korrelieren. Eines oder mehrere der gelesenen optisch erkennbaren Merkmale können auf einer Festplatte, in einem Speicher oder in einer Cloud des Detektors, der Getränkemaschine oder in beiden gespeichert werden. Der eine oder die mehreren Detektoren können so funktionieren, dass sie das eine oder die mehreren optisch erkennbaren Merkmale lesen, identifizieren und/oder mit einer oder mehreren gespeicherten Referenzen korrelieren, um den Typ der Portionskapsel zu bestimmen. Zum Beispiel können der eine oder die mehreren Detektoren erkennen, ob die Portionskapsel Kaffee, Espresso, Kakao, alkoholische oder alkoholfreie Getränkezutaten oder Zutaten zur Maschinenreinigung enthält. Beispielsweise kann der eine oder die mehreren Detektoren erkennen, ob die Portionskapsel warmes, kaltes oder umgebendes Wasser oder eine andere Flüssigkeit (Milch, Saft usw.) benötigt, um das gewünschte Getränk herzustellen. Beispielsweise können der oder die Detektoren die Maschinenparameter zur Herstellung des gewünschten oder beabsichtigten Getränks ermitteln, wie z. B. die Flüssigkeitstemperatur, den Flüssigkeitsdruck, die Flüssigkeitsmenge, die Erhitzungs- oder Abkühlungszeit und/oder -temperatur, ob zusätzliche Zutaten oder Flüssigkeiten mit dem Getränk gemischt werden müssen oder ob sie durch die Portionskapsel laufen müssen. Die ein oder mehreren Detektoren können in der Lage sein, die Maschinenparameter für die Reinigung der Getränkemaschine zu identifizieren, wenn der Detektor erkennt, dass die Kapsel für die Reinigung der Maschine bestimmt ist. Der eine oder die mehreren Detektoren können so funktionieren, dass sie ein inkompatibles optisch detektierbares Merkmal erkennen, wenn eine Portionskapsel in die Maschine eingeführt wird, die nicht für die Verwendung in der Maschine vorgesehen ist. Dies kann vorteilhafterweise verhindern, dass ein Fehler auftritt, die Maschine beschädigt und/oder ein Bediener oder Unbeteiligter verletzt wird.

Das eine oder die mehreren optisch erkennbaren Merkmale können eines oder mehrere sein: Farben, Muster, Logos, Strichcodes (2-dimensional und/oder 3-dimensional), Bitcodes, Binärcode, Vertiefungen, Einkerbungen, Erhebungen, Vorsprünge, Erhebungen. Das eine oder die mehreren optisch erkennbaren Merkmale können für das menschliche Auge sichtbar sein. Das eine oder die mehreren optisch erkennbaren Merkmale können für das menschliche Auge unsichtbar sein. Das eine oder die mehreren optisch detektierbaren Merkmale können Rippen, Vorsprünge, Erhebungen, Noppen, Abstandshalter, Widerhaken, Öffnungen, Löcher, Vertiefungen, Rillen und Vertiefungen umfassen. Bei dem einen oder den mehreren optisch erkennbaren Merkmalen kann es sich um ein oder mehrere Bilder, Muster, Linien oder Rillen handeln. Das eine oder die mehreren optisch erkennbaren Merkmale können flach oder eindimensional sein. Das eine oder die mehreren optisch erkennbaren Merkmale können dreidimensional sein.

Die Getränkemaschine kann einen oder mehrere Detektoren enthalten. Der eine oder die mehreren Detektoren können elektrisch (drahtgebunden oder drahtlos) mit einem Systemnetzwerk verbunden sein. Der eine oder die mehreren Detektoren können Informationen über die Verwendung der Portionskapsel in der Maschine an das Systemnetzwerk übermitteln. Die Informationen können von einem oder mehreren optisch erkennbaren Merkmalen und/oder der Maschine gesammelt und dann an ein Systemnetzwerk übertragen werden. Die gesammelten und übermittelten Informationen können einem Lieferanten oder Hersteller der Portionskapseln und/oder Maschinen oder einem Servicetechniker helfen, Probleme mit der Portionskapsel und/oder der Maschine zu erkennen. Die gesammelten und übertragenen Informationen können einem Lieferanten oder Hersteller der Portionskapseln und/oder - maschinen helfen, die Gewohnheiten der Verbraucher vorherzusagen, den Verbrauch zu bestimmen, Bestellungen zu erstellen, den Lagerbestand zu verwalten, ein Kundenbindungsprogramm zu erstellen, Informationen über die Vorlieben der Verbraucher zu sammeln, Daten zu generieren und zu analysieren, die Produktion, die Herstellung und den Versand auf der Grundlage des Verbrauchs der Verbraucher vorherzusagen. Das Systemnetzwerk kann sich überall auf der Welt befinden, einschließlich im selben Staat oder Land wie die Getränkemaschine und/oder der Benutzer, oder in einem anderen Staat oder Land.

Die vorliegende Lehre sieht ein Verfahren zur Rückgewinnung und/oder Kompostierung einer Portionskapsel, des Deckels, des Filters oder einer Kombination davon vor. Das Verfahren kann das Abtrennen eines oder mehrerer Elemente (falls vorhanden) aus der Portionskapsel, das Abtrennen des Deckels von der Portionskapsel und das Kompostieren eines oder mehrerer der Basiselemente und/oder des Deckels umfassen. Das Verfahren kann einen Schritt der Kompostierung der gesamten Portionskapsel einschließlich des Deckels, des Filters (falls vorhanden) und/oder des Bodens umfassen.

Weitere Einzelheiten, Merkmale und Vorteile der Portionskapsel ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Portionskapsel, welche den wesentlichen Erfindungsgedanken nicht einschränken.

### Kurze Beschreibung der Zeichnungen

- **Figur 1**: zeigt eine schematische Schnittbildansicht einer Portionskapsel gemäß einer beispielhaften Ausführungsform der vorliegenden Erfindung.
- **Figur 2**: zeigt eine schematische Ansicht der Portionskapsel gemäß einer weiteren beispielhaften Ausführungsform der vorliegenden Erfindung.
- **Figur 3**: zeigt eine schematische Detailansicht des Ringelements gemäß einer beispielhaften Ausführungsform der vorliegenden Erfindung.
- **Figur 4**: zeigt eine schematische Ansicht des Ringelements gemäß einer weiteren beispielhaften Ausführungsform der vorliegenden Erfindung.
- **Figur 5**: zeigt eine schematische Detailansicht des Ringelements gemäß der in **Figur 4** dargestellten beispielhaften Ausführungsform der vorliegenden Erfindung.
- **Figur 6**: zeigt eine weitere schematische Detailansicht des Ringelements gemäß der in **Figur 4** dargestellten beispielhaften Ausführungsform der vorliegenden Erfindung.
- **Figur 7**: zeigt eine schematische Ansicht der Portionskapsel gemäß einer weiteren beispielhaften Ausführungsform der vorliegenden Erfindung.

### Ausführungsformen der Erfindung

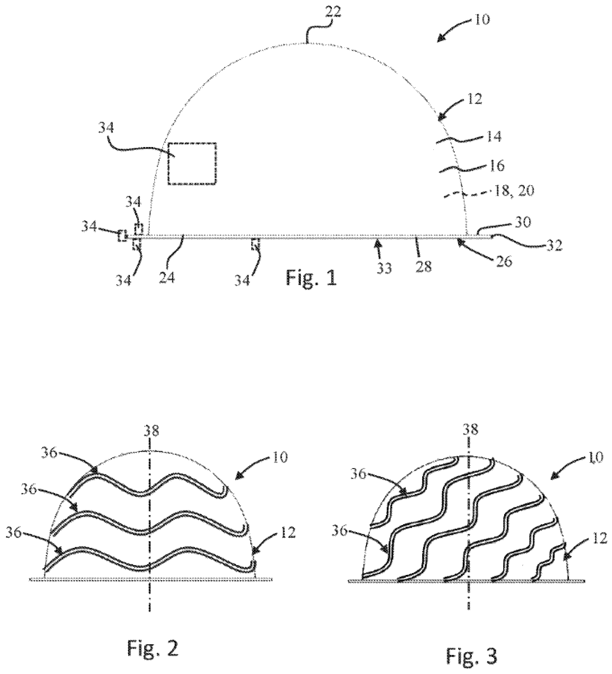

In **Figur 1** ist eine schematische Seitenansicht einer Portionskapsel 10 zur Zubereitung eines Getränks offenbart.

Die Portionskapsel 10 weist ein Basiselement 12 auf (auch als Körper bezeichnet). Der Körper oder das Basiselement 12 umfasst eine Seitenwand 14 (auch als Kapselwand bezeichnet). Die Seitenwand 12 erstreckt sich von einem Bodenbereich 22 (auch als Kapselboden bezeichnet) bis zu einem umlaufenden Flansch 26, der seitlich absteht und insbesondere umlaufend ausgebildet ist. Das Basiselement 12 spannt einen Hohlraum 20 auf, welcher zum Aufnahmen von Getränkerohmaterial vorgesehen ist. Auf der dem Bodenbereich 22 abgewandten Seite weist das Basiselement eine Einfüllöffnung auf, durch welche der Hohlraum 20 mit dem Getränkerohmaterial befüllbar ist.

Die Portionskapsel 10 weist beispielhaft sphärisch ausgebildetes Basiselement 12 auf, welches an seiner geschlossenen Seite den Kapselboden 22 (der gewölbt ausgebildet sein kann und keinesfalls plan ausgebildet sein muss) und an seiner offenen Seite einen umlaufenden Flansch 26 aufweist. Zwischen dem Kapselboden 22 und dem Flansch 26 erstreckt sich die Kapselwandung 14 um den Hohlraum 20. Die Portionskapsel 10 ist um ihre zentrale Mittellängsachse rotationssymmetrisch aufgebaut. In radialer Richtung zu der zentralen Rotationssymmetrieachse steht der Flansch 26, der kreisförmig und somit in Umfangsrichtung umlaufend ausgebildet ist, nach außen über die Kapselwandung 14 vor.

Der Flansch 26 ist mit einem Kapseldeckel 33 (auch als Deckel bezeichnet) in Form einer insbesondere kreisförmigen Deckelfolie fest verbunden, welche den Hohlraum 20 auf der offenen Seite des Basiselements 12 verschließt. Der Flansch 26 weist vorzugsweise hierfür eine dem Kapseldeckel 33 zugewandte Siegelebene auf, welche sich ungefähr rechtwinklig zur Rotationssymmetrieachse erstreckt. Der Kapseldeckel 33 ist in seinem Randbereich an den Flansch 26 und insbesondere auf die Siegelebene gesiegelt, geschweißt oder geklebt.

Der Kapseldeckel 33 ist bevorzugt aus Aluminium oder Kunststoff, ausgeführt. Innerhalb des Basiselements 12 ist der Hohlraum 20 ausgebildet, welcher mit dem Getränkerohmaterial, beispielsweise Kaffeeröstgranulat, Instantkaffee, Schokoladenpulver, Teeverschnitt, Milchpulver und/oder dergleichen befüllt ist (aus Gründen der Übersichtlichkeit nicht illustriert) und welcher durch den Kapseldeckel 33 verschlossen ist.

Die sphärische Ausgestaltung des Basiselements 12 wird vorzugsweise durch Thermoformen, beispielsweise Tiefziehen mittels Unterdruck, Überdruck und/oder einem beweglichen Stempel, erzeugt. Das Basiselement 12 ist vorzugsweise als tiefgezogenes Aluminiumteil ausgebildet. Alternativ wäre aber auch denkbar, dass das Basiselement 12 aus Kunststoff, wie Polyethylen (PE), Polypropylen (PP), Polyvinylchlorid (PVC) oder Polyethylenterephthalat (PET) ausgebildet ist. Alternativ wird die Portionskapsel 10 mittels Spritzgussverfahren, insbesondere im Einkomponenten-, Mehrkomponenten- oder In-Mold-Verfahren, hergestellt. Als weitere Alternative wäre denkbar, dass das Basiselement 12 vollständig oder teilweise aus einen biologisch abbaubaren Material, insbesondere aus Cellulosefasern, die in eine Harzmatrix eingebettet sein können, hergestellt ist.

Die Portionskapsel 12 ist dazu vorgesehen, in eine Brüheinheit einer Getränkeherstellungsmaschine 14 eingeführt zu werden, um ein Getränk herzustellen. Die Brüheinheit umfasst ein erstens Brühkammerteil und ein zweites Brühkammerteil, wobei das erste oder das zweite Brühkammerteil relativ zum anderen Brühkammerteil zwischen einer angenäherten Position, in welcher das erste und das zweite Brühkammerteil eine geschlossene Brühkammer bilden, und einer offenen Position, in welcher das erste und das zweite Brühkammerteil zum Einsetzen oder Auswerfen der Portionskapsel 1 voneinander beabstandet sind, bewegbar, insbesondere verschenkbar oder verschiebbar ist.

In der geschlossenen Position werden der Kapseldeckel 33 und/oder der Kapselboden 22 perforiert, um Perforationsöffnung zum Einbringen von Brühflüssigkeit oder zum Ausleiten des hergestellten Getränks zu erzeugen. Die Brühflüssigkeit wird unter Druck in den Hohlraum 20 eingeleitet. Durch die Wechselwirkung zwischen der Brühflüssigkeit und dem Getränkerohmaterial entsteht das gewünschte Getränk, welches die Portionskapsel 12 durch die Perforationsöffnungen verlässt und einem Getränkegefäß zugeführt wird. Durch ein optionales Filtermedium können etwaige Partikel des Getränkerohmaterials aus dem Getränk gefiltert und in der Portionskapsel 10 zurückgehalten werden. Vorzugsweise fungiert aber der mehrfach perforierte Kapseldeckel 33 als Filterelement.

Die Portionskapsel 10 weist nun ein insbesondere von einem Detektor der Getränkeherstellungsmaschine optisch detektierbares Merkmal 34 auf. Dieses Merkmal 34 dient vorzugsweise dazu, dass die Portionskapsel 10 in der Getränkeherstellungsmaschine zu identifizieren. Somit kann von der Getränkeherstellungsmaschine beispielsweise verifiziert werden, ob es sich bei der in der Brühkammer befindlichen Portionskapsel 10 um eine systemkompatible Portionskapsel 10 handelt, und/oder ein passendes Brühprogramm für das in der Portionskapsel 10 befindliche Getränkerohmaterial automatisch ausgewählt und gestartet werden kann. Denkbar ist auch, dass konkret zu verwendende Brühparameter in das optisch detektierbare Merkmal 34 eingebettet sind und mittels des Detektors ausgelesen werden.

Das optisch detektierbare Merkmal 34 ist insbesondere ein maschinenauslesbarer Code, vorzugsweise ein eindimensionaler oder mehrdimensionaler Bit- oder Barcode.

Der Flansch 26 kann eine obere Fläche 28 und eine gegenüberliegende untere Fläche 30 haben. Die obere Fläche 28 kann von dem Basiselement 12 abgewandt sein. Die untere Fläche 30 kann dem Basiselement 12 zugewandt sein. Der Flansch 26 kann eine Seitenfläche 32 aufweisen. Die Seitenfläche 32 kann sich zwischen der oberen und der unteren Fläche 28, 30 erstrecken und diese miteinander verbinden.

Der Deckel 33 kann an dem Basiselement 12, der Seitenwand 14, dem Flansch 26, der Oberseite 28 des Flansches 26, der Seitenfläche 32 des Flansches 26, der Unterseite des Flansches 26 oder einer Kombination davon befestigt oder angebracht sein.

Die Portionskapsel 10 kann ein oder mehrere optisch erfassbare Merkmale 34 aufweisen. Das eine oder die mehreren optisch detektierbaren Merkmale 34 (schematisch mit gestrichelten Kästchen dargestellt) können sich auf dem Körper oder dem Basiselement 12, der Seitenwand 14, der Außenfläche 16, dem Flansch 26, der oberen Fläche 28 des Flansches 26, der unteren Fläche 30 des Flansches, der Seitenfläche 34 des Flansches 26, dem Deckel 33 oder einer Kombination davon befinden. Bei dem einen oder den mehreren optisch erkennbaren Merkmalen 34 kann es sich um eines oder mehrere der hier offengelegten optisch erkennbaren Merkmale handeln. Das eine oder die mehreren optisch detektierbaren Merkmale 34 können das gleiche sein wie das eine oder die mehreren hierin offenbarten Kapselmerkmale 36. Das eine oder die mehreren optisch detektierbaren Merkmale 34 können sich von dem einen oder den mehreren hierin offenbarten Kapselmerkmalen 36 unterscheiden.

Dier vorstehenden zur Figur 1 ausgeführten Erläuterungen gelten insbesondere ganz allgemein für alle nachfolgend beschriebenen Varianten der Portionskapsel 10 und werden lediglich aus Gründen der Übersichtlichkeit bei der näheren Beschreibung der Figuren 2 bis 16 nicht jeweils erneut wiederholt.

In **Figur 2** ist eine schematische Seitenansicht einer Portionskapsel 10 zur Zubereitung eines Getränks gemäß einer ersten Variante offenbart.

Das optisch detektierbare Merkmal 34 erstreckt sich bei der ersten Variante über die Kapselwandung 14 des Basiselements 12. Das optisch detektierbare Merkmal 34 umfasst einen maschinenauslesbaren Code aus einer Mehrzahl von Linien, wobei sich alle oder zumindest mehrere Linien über die Kapselwandung 14 erstrecken. Denkbar ist, dass die Linien zumindest teilweise parallel zueinander verlaufen und insbesondere unterschiedliche Dicken aufweisen.

Die Linien sind auf die Kapselwandung 14 aufgedruckt oder als rillenförmige Vertiefungen in der Kapselwandung 14 (oder hervorstehende Stege auf der Kapselwandung 14) ausgebildet.

Die Linien sind im Bereich der Kapselwandung 14 teilweise gekrümmt und insbesondere wellenförmig ausgebildet.

Der Körper oder das Basiselement 12 umfasst ein oder mehrere Kapselmerkmale 36. Das eine oder die mehreren Kapselmerkmale 36 können eine oder mehrere Wellen sein oder eine Wellenform aufweisen. Das eine oder die mehreren Kapselmerkmale 36 können sich relativ zu einer zentralen Längsachse 38 der Portionskapsel 10 allgemein horizontal erstrecken.

In **Figur 3** ist eine schematische Seitenansicht einer Portionskapsel 10 zur Zubereitung eines Getränks gemäß einer zweiten Variante offenbart.

Die zweite Variante gleicht im Wesentlichen der ersten Variante, wobei sich das optisch detektierbare Merkmal 34 sowohl über die Kapselwandung 14 als auch über den Flansch 26 erstreckt. Das optisch detektierbare Merkmal 34 ist wiederum ein maschinenauslesbarer Code, der aus einer Mehrzahl von Linien aufgebaut ist, wobei sich alle oder zumindest mehrere Linien jeweils sowohl über die Kapselwandung 14 als auch über den Flansch 26 erstrecken. Denkbar ist, dass die Linien zumindest teilweise parallel zueinander verlaufen und insbesondere unterschiedliche Dicken aufweisen.

Die Linien sind im Bereich der Kapselwandung 14 teilweise gekrümmt und insbesondere wellenförmig ausgebildet und münden im Bereich des Flansches 26 in geradlinig und insbesondere radial zu der zentralen Rotationsymmetrieachse der Portionskapsel 10 verlaufende Linien auf einer dem Kapseldeckel 33 abgewandten Seite (Unterseite 30) vom Flansch 26.

Im Flanschbereich 26 bilden die Linien somit insbesondere einen eindimensionalen Bit- oder Barcode.

Die Linien sind auf die Kapselwandung 14 und/oder den Flansch 26 aufgedruckt oder als rillenförmige Vertiefungen in der Kapselwandung 14 und/oder dem Flansch 26 (oder hervorstehende Stege auf der Kapselwandung 14 und/oder dem Flansch 26) ausgebildet.

Der Körper oder das Basiselement 12 umfasst ein oder mehrere Kapselmerkmale 36. Das eine oder die mehreren Kapselmerkmale 36 können eine oder mehrere Wellen sein oder eine Wellenform aufweisen. Das eine oder die mehreren Kapselmerkmale 36 können sich in einem Winkel (d. h. diagonal) relativ zu einer zentralen Längsachse 38 der Portionskapsel 10 erstrecken. Diese Merkmale können auch oder stattdessen auf dem Deckel 33 und/oder dem Flansch 26 angeordnet sein.

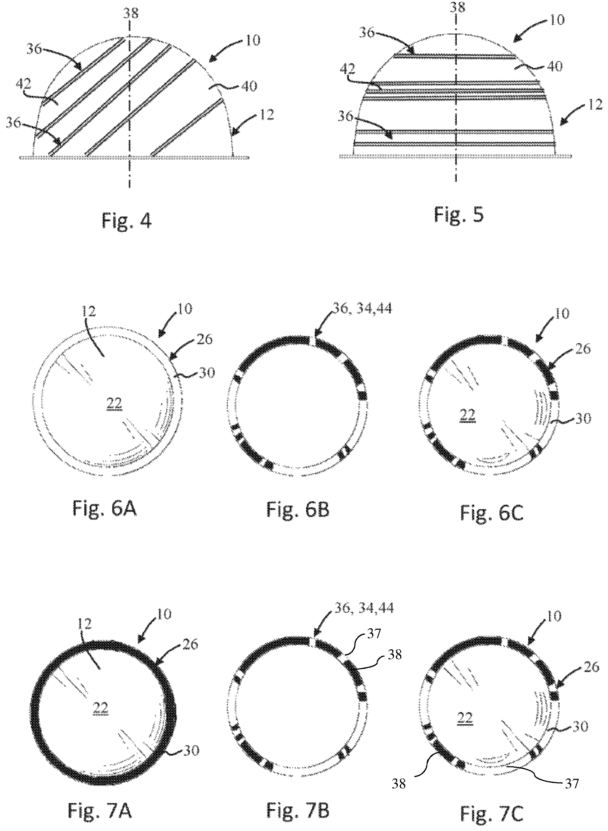

In **Figur 4** ist eine schematische Seitenansicht einer Portionskapsel 10 zur Zubereitung eines Getränks gemäß einer dritten Variante offenbart.

Die dritte Variante gleicht insbesondere der in Figur 3 gezeigten zweiten Variante, wobei als einzigem Unterschied die Linien im Bereich der Kapselwandung 14 nicht wellenförmig sondern geradlinig verlaufen. Insbesondere verlaufen die Linien in einem Winkel zur Haupterstreckungsebene des Kapseldeckels 33.

Der Körper oder das Basiselement 12 umfasst ein oder mehrere Kapselmerkmale 36. Das eine oder die mehreren Kapselmerkmale 36 können in einem Winkel (d. h. diagonal) relativ zu einer zentralen Längsachse 38 der Portionskapsel 10 verlaufen. Die Abstände zwischen den benachbarten Kapselmerkmalen 36 können im Allgemeinen gleich groß sein. Die Abstände zwischen den benachbarten Kapselmerkmalen 36 können unterschiedlich sein. Zum Beispiel kann der Abstand 40 zwischen bestimmten Kapselmerkmalen 36 größer oder stärker sein als der Abstand 42 zwischen bestimmten anderen Kapselmerkmalen 36. Diese Merkmale können sich auch oder stattdessen auf dem Deckel 33 und/oder dem Flansch 26 befinden.

In **Figur 5** ist eine schematische Seitenansicht einer Portionskapsel 10 zur Zubereitung eines Getränks gemäß einer vierten Variante offenbart.

Die vierte Variante gleicht insbesondere der in Figur 2 gezeigten ersten Variante, wobei als einzigem Unterschied die Linien im Bereich der Kapselwandung 14 nicht wellenförmig sondern geradlinig verlaufen. Insbesondere verlaufen die Linien parallel zur Haupterstreckungsebene des Kapseldeckels 33 und somit rechtwinklig zur zentralen Rotationssymmetrieachse der Portionskapsel 10.

Der Körper oder das Basiselement 12 umfasst ein oder mehrere Kapselmerkmale 36. Das eine oder die mehreren Kapselmerkmale 36 können sich in einem Winkel (d. h. horizontal, im Allgemeinen senkrecht) relativ zu einer zentralen Längsachse 38 der Portionskapsel 10 erstrecken. Die Abstände zwischen den benachbarten Kapselmerkmalen 36 können im Allgemeinen gleich groß sein. Die Abstände zwischen den benachbarten Kapselmerkmalen 36 können unterschiedlich sein. Zum Beispiel kann der Abstand 40 zwischen bestimmten Kapselmerkmalen 36 größer oder stärker sein als der Abstand 42 zwischen bestimmten anderen Kapselmerkmalen 36. Diese Merkmale können sich auch oder stattdessen auf dem Deckel 33 und/oder dem Flansch 26 befinden.

In **Figur 6C** ist eine schematische Ansicht (Sicht auf die der Deckelfolie 33 abgewandten Seite der Portionskapsel 10) einer Portionskapsel 10 zur Zubereitung eines Getränks gemäß einer fünften Variante offenbart.

Das optische detektierbare Merkmal 34, 36 ist auf einem separaten Ring 44 angeordnet (dargestellt in Figur 6B), welche mit dem Basiselement 12 (dargestellt in Figur 6A) verbunden ist. Der Ring 44 wird dabei insbesondere auf die dem Kapseldeckel 33 abgewandte Seite (Unterseite 30) des Flansches 26 aufgebracht.

Fig. 6A zeigt einen Teil der Kapsel 10, genauer gesagt die Bodenfläche 30 des Basiselements. Fig. 6B zeigt ein Kapselmerkmal 36, das ein oder mehrere optisch erkennbare Merkmale 34 enthalten kann. Bei dem Kapselmerkmal 36 kann es sich um einen Ring 44 handeln. Der Ring 44 kann ein O-Ring oder ein anderes Element sein, das die zusätzliche Funktion hat, eine Dichtung zwischen der Portionskapsel 10 und der Getränkemaschine zu bilden, um zu verhindern, dass Wasser oder Flüssigkeit zwischen der Kapsel 10 und der Maschine ausläuft. Der Ring 44 kann aus dem gleichen oder einem anderen Material bestehen wie der Boden, der Flansch und/oder der Deckel. Der Ring 44 kann eine Öffnung haben, die so bemessen ist, dass sie über die Bodenfläche 22 des Körpers oder des Basiselements 12 gleitet. Die Öffnung des Rings 44 kann jedoch kleiner als der Flansch 26 sein, so dass der Ring 44 gegen die Bodenfläche 30 des Flansches 26 gelegt werden kann.

Wie in Fig. 6C gezeigt, sind nach dem Aufsetzen des Rings 44 auf die Kapsel 10 die ein oder mehreren optisch erkennbaren Merkmale 34 des Rings 44 von einem Boden und/oder einer Seite der Kapsel 10 oder des Flansches sichtbar. Der Ring 44 kann an der Kapsel 10 oder dem Flansch 26 befestigt (geklebt, geklebt, geschweißt usw.) werden. Alternativ dazu kann der Ring 44 frei von jeglichen Befestigungselementen zwischen dem Ring 44 und der Kapsel 10 und/oder dem Flansch 26 sein.

In **Figur 7C** ist eine schematische Ansicht (Sicht auf die der Deckelfolie 33 abgewandten Seite der Portionskapsel 10) einer Portionskapsel 10 zur Zubereitung eines Getränks gemäß einer sechsten Variante offenbart.

Der Flansch 26 ist mit Ausnehmungen 37 (auch als Aussparungen bezeichnet) versehen, welche zur Bildung des optisch detektierbaren Merkmals 34, 36 dienen. Durch die Ausnehmungen 37 bilden sich mi Flansch 26 Stege 38 (oder stegartige, flächige Vorsprünge), welche in radialer Richtung bezogen auf die zentrale Rotationssymmetrieachse der Portionskapsel 10 vorsehen.

Die Ausnehmungen 37 erstrecken sich parallel zur Rotationssymmetrieachse vorzugsweise vollständig durch den Flansch 26 und werden von dem kreisförmigen Kapseldeckel 33 überdeckt. Der Kapseldeckel 33 weist auf seiner dem Flansch 26 zugewandten Seite insbesondere eine andere Farbe als der Flansch 26 auf seiner dem Kapseldeckel 33 abgewandten Seite auf. Eine Sicht auf die Unterseite 30 des Flansches 26 ergibt somit ein Kontrastbild aus Stegen und Aussparungen, durch welche der Kapseldeckel 33 durchscheint.

Der Kapseldeckel 33 bildet somit zusammen mit den Ausnehmungen 37 einen reliefartigen, maschinenauslesbaren Code, vorzugsweise einen eindimensionalen Bit- oder Barcode. Alternativ ist denkbar, dass sich die Ausnehmungen 37 parallel zur Rotationssymmetrieachse nicht durch den gesamten Flansch 26 erstrecken und nur in die dem Kapseldeckel 33 abgewandte Seite (Unterseite 30) eingebracht sind. Das optisch detektierbare Merkmal 34, 36 umfasst somit ein in die Unterseite 30 eingebrachtes Relief, welches den maschinenauslesbaren Code, vorzugsweise einen eindimensionalen Bit- oder Barcode repräsentiert. Das optisch detektierbare Merkmal 34, 36 ist somit als dreidimensionale Struktur im Flansch 26 ausgebildet. Es umfasst also vorzugsweise eine Mehrzahl von Vertiefungen 37 und Erhebungen 38, die insbesondere in Form von Rillen 37 und Vorsprüngen 38, die radial zu der zentralen Rotationssymmetrieachse der Portionskapsel verlaufen, ausgebildet sind.

Denkbar ist, dass die dreidimensionale Struktur bei der Herstellung des Basiselements 12 eingeformt wird, insbesondere während eines Tiefziehprozesses zur Herstellung des Basiselements 12. Ferner könnte die dreidimensionale Struktur in den Flansch 26 eingeprägt, eingestanzt oder eingraviert sein. Alternativ wäre auch denkbar, dass die dreidimensionale Struktur in Form einer in den Flansch 26 eingebrachten Leiterstruktur aus Ausnehmungen 37 und Nicht-Ausnehmungen 38 ausgebildet ist.

Eine weitere Alternativ ist, dass die optisch detektierbaren Merkmale 34, 36 in Form der Ausnehmungen 37 nicht in den Flansch 26 des Basiselements 12 sondern in einen Ring 44 eingebracht werden. Der Ring ist in Figur 7B dargestellt und wird auf den Flansch 26 des Basiselements 12 (dargestellt in Figur 7A) verbunden, beispielsweise aufgeklebt. Der Ring 44 weist eine Leiterstruktur aus Ausnehmungen 37 und Nicht-Ausnehmungen 38 auf, welche wie oben beschrieben den Code repräsentieren. Denkbar ist, dass die Nicht-Ausnehmungen 38 nur auf ihrer radial innenliegenden Seite ringförmig miteinander verbunden sind.

Nach der Verbindung von dem Ring 44 mit dem Basiselement 12 kann der in Figur 7B gezeigte Ring 44 als zweiter Flanschbereich bezeichnet werden, während der in Figur 7A gezeigte Flansch 26, der keine Ausnehmungen 37 aufweist, als erster Flanschbereich zu bezeichnen ist. Der erste Flanschbereich weist auf seiner dem zweiten Flanschbereich zugewandten Seite vorzugsweise eine andere Farbe als der zweite Flanschbereich auf seiner dem ersten Flanschbereich abgewandten Seite auf.

Figur 7A zeigt einen Teil der Kapsel 10, genauer gesagt die Unterseite 30 des Basiselements. Die Unterseite 30 des Flansches 26 kann eine Farbe haben (z. B. schwarz, weiß, blau, rot, grün usw.). Figur 7B zeigt ein Kapselmerkmal 36, das ein Ring 44 sein kann. Der Ring 44 kann offene Stellen wie Sprossen einer Leiter aufweisen. Der Ring 44 kann eine Farbe haben, die sich von der Farbe der Unterseite 30 des Flansches 26 unterscheidet. Wie aus Fig. 7C hervorgeht, wirken nach der Montage des Rings 44 auf der Kapsel 10 die ein oder mehreren optisch detektierbaren Merkmale 34 des Rings 44 mit der farbigen Bodenfläche 30 des Flansches zusammen, um ein optisch detektierbares Merkmal 34 zu erzeugen, das von einem Detektor gelesen oder identifiziert werden kann.

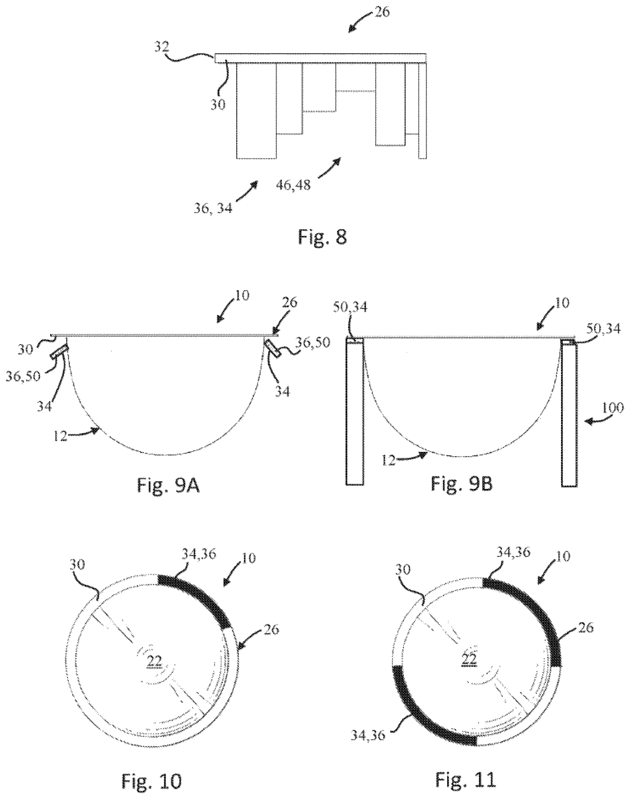

In **Figur 8** ist eine schematische Seitenansicht einer Portionskapsel 10 zur Zubereitung eines Getränks gemäß einer siebten Variante offenbart.

In Figur 8 ist eine Schnittbildansicht (Schnitt in radialer Richtung bezogen auf die zentrale Rotationssymmetrieachse der Portionskapsel 10) des Flansches 26 im Details dargestellt. Das optisch detektierbare Merkmal 34, 36 wird durch eine Vorsprüngen 46 und Vertiefungen 48 gebildet, die - wie oben beschrieben - durch Tiefziehen, Stanzen, Pressen, Spritzgießen oder sonstige Verfahren in den Flansch 26 eingebracht werden können.

Abb. 8 zeigt ein Kapselmerkmal 36 und/oder optisch erkennbare Merkmale 34. Bei den Merkmalen 36, 34 handelt es sich um eine Reihe von Vorsprüngen 46 und Vertiefungen 48 bzw. Bergen und Tälern, die sich von der Bodenfläche 30 des Flansches 26 aus erstrecken. Die Vorsprünge 46 und Vertiefungen 48 können auf einem Ring angebracht sein, wie oben in den Fig. 6A-7C beschrieben. Die Vorsprünge 46 und Vertiefungen 48 können auf den Flansch 26 geklebt werden. Die Vorsprünge 46 und Aussparungen 48 können integral mit dem Flansch 26 ausgebildet sein. Die optisch erkennbaren Merkmale 34 und insbesondere die Vorsprünge 46 und Vertiefungen 48 oder Berge und Täler bilden ein optisch erkennbares Merkmal 34, das von einem Detektor gelesen oder identifiziert werden kann.

In **Figur 9A** ist eine schematische Schnittbildansicht (Schnitt in radialer Richtung bezogen auf die zentrale Rotationssymmetrieachse der Portionskapsel 10) einer Portionskapsel 10 zur Zubereitung eines Getränks gemäß einer achten Variante offenbart.

Die achte Variante zeichnet sich dadurch aus, dass die Portionskapsel wiederum ein insbesondere von einem Detektor der Getränkeherstellungsmaschine optisch detektierbares Merkmal 34 aufweist, wobei aber die Portionskapsel 10 eine von dem Basiselement 12 abstehende umlaufende Lippe 50 (auch als Flügel bezeichnet) aufweist und das optisch detektierbare Merkmal 34 an der Lippe 50 angeordnet ist. Das optisch detektierbare Merkmal 34, 36 ist dabei insbesondere an einer dem Flansch 26 abgewandten Seite der Lippe 50 angeordnet.

Die Lippe 50 selbst und/oder die Verbindung der Lippe 50 zum Basiselement 12 ist vorzugsweise derart flexibel oder bewegbar ausgebildet ist, dass sich die (dem Flansch 26 zugewandte Seite der) Lippe 50 in der Brühkammer der Getränkeherstellungsmaschine an die Unterseite 30 des Flansches 26 anlegen kann (diese Situation ist in Figur 9B illustriert). Die Unterseite 30 ist die dem Kapseldeckel 33 abgewandte Seite des Flansches 26.

Denkbar ist, dass die Lippe 50 ein Dichtelement ist, welches insbesondere aus einem elastisch oder plastisch deformierbaren Material gefertigt ist und somit die Abdichtung zwischen Brühkammerelement und Flansch 26 verbessert.

Die Lippe 50 ist insbesondere ringförmig ausgebildet und insbesondere umlaufend an der Kapselwandung 14 befestigt. Alternativ ist die Lippe 50 an der Unterseite 30 des Flansches 26 befestigt. Denkbar wäre auch, dass die Lippe 50 an der in radialer Richtung außenliegenden Außenkante des Flansches 26 oder der Unterseite 30 befestigt ist.

Optional ist die Lippe 50 in einem Übergangsbereich von der Kapselwandung 14 zum Flansch 26 an dem Basiselement 12 befestigt. Denkbar ist, dass die Befestigung der Lippe 50 an das Basiselement 12 als Scharnier fungiert.

In der in Figur 9A illustrierten Ausgangslage ist die Lippe 50 in einem Winkel von 25 bis 65 Grad, bevorzugt von 35 bis 55 Grad und besonderes bevorzugt von im Wesentlichen 45 Grad zu einer Haupterstreckungsrichtung des Flansches 26 ausgerichtet.

Das auf der Lippe 50 befindliche optisch detektierbare Merkmal 34 ist beispielsweise ein maschinenauslesbarer Code, vorzugsweise ein eindimensionaler oder mehrdimensionaler Bit- oder Barcode ist.

In Abb. 9A ist die Portionskapsel 10 dargestellt. Die Portionskapsel 10 umfasst ein oder mehrere Kapselmerkmale 36. Das Kapselmerkmal 36 kann eine Lippe oder ein Flügel 50 oder ein separates Element auf dem Körper oder dem Basiselement 12 sein. Die Lippe oder der Flügel 50 kann an dem Kapselkörper 12 angebracht oder einstückig mit dem Basiselement 12 ausgebildet sein. Die Lippe oder der Flügel 50 kann ein Ring sein, der über den Körper oder das Basiselement passt. Die Lippe oder der Flügel kann sich um den gesamten Umfang des Basiselements oder nur um einen Teil des Umfangs erstrecken. Die Lippe oder der Flügel 50 kann ein optisch erkennbares Merkmal 34, 36 sein oder enthalten. Das optisch erkennbare Merkmal 34, 36 kann der Seitenwand 14 oder der Bodenfläche 30 des Basiselements 12 zugewandt und von der Bodenfläche 30 des Flansches 26 abgewandt sein. In einigen Konfigurationen kann das optisch detektierbare Merkmal 34, 36 jedoch auch oder stattdessen von der Seitenwand 14 oder der Bodenfläche 30 des Basiselements 12 weg und zur Bodenfläche 30 des Flansches 26 hin gerichtet sein. Wie aus Fig. 9B hervorgeht, kann sich die Lippe oder der Flügel 50 nach dem Einsetzen der Kapsel 10 in eine Getränkemaschine 10 verformen oder gegen den Flansch 26 hochklappen und zwischen dem Flansch 26 und dem Kapselhalter der Getränkemaschine 100 eingeklemmt werden. Das optisch erkennbare Merkmal 34, 36 kann von einem Detektor gelesen oder identifiziert werden. Der Detektor kann oberhalb, unterhalb oder seitlich der Kapsel angeordnet sein.

In **Figur 10** ist eine schematische Aufsichtsdarstellung (Sicht auf die der Deckelfolie 33 abgewandten Seite der Portionskapsel 10) einer Portionskapsel 10 zur Zubereitung eines Getränks gemäß einer neunten Variante offenbart.

Bei der neunten Variante erstreckt sich das optisch detektierbare Merkmal 34, 36, also insbesondere der maschinenauslesbare Code nur über ein Teilsegment der Unterseite 30 des kreisförmigen Flansches 26 und somit insbesondere nicht über den gesamten Umfang des Flansches 26.

Abb. 10 zeigt eine Portionskapsel 10, die ein Basiselement 12 und einen Flansch 26 umfasst. Die Bodenfläche 30 des Flansches 26 enthält ein oder mehrere Kapselmerkmale 36 und/oder optisch erkennbare Merkmale 34. Die ein oder mehreren Kapselmerkmale 36 und/oder optisch erfassbaren Merkmale 34 erstrecken sich nicht über den gesamten Umfang des Flansches 26 oder des Basiselements 12. Stattdessen sind die ein oder mehreren Kapselmerkmale 36 und/oder optisch detektierbaren Merkmale 34 nur entlang eines Abschnitts davon angeordnet, z.B. entlang eines Bogens von 10 Grad oder weniger, eines Bogens von 20 Grad oder weniger, eines Bogens von 30 Grad oder weniger, eines Bogens von 45 Grad oder weniger, eines Bogens von 60 Grad oder weniger, eines Bogens von 90 Grad oder weniger, eines Bogens von 120 Grad oder weniger, eines Bogens von 180 Grad oder weniger, eines Bogens von 270 Grad oder weniger oder eines Bogens von weniger als 360 Grad.

In **Figur 11** ist eine schematische Aufsichtsdarstellung (Sicht auf die der Deckelfolie 33 abgewandten Seite der Portionskapsel 10) einer Portionskapsel 10 zur Zubereitung eines Getränks gemäß einer zehnten Variante offenbart.

Ähnlich wie bei der neunten Variante erstreckt sich bei der zehnten Variante das optisch detektierbare Merkmal 34, 36, also insbesondere der maschinenauslesbare Code ebenfalls nur über ein Teilsegment der Unterseite 30 des kreisförmigen Flansches 26 und somit insbesondere nicht über den gesamten Umfang des Flansches 26.

Fig. 11 ist ähnlich wie Fig. 10. Die Portionskapsel 10 hat zwei diskrete Abschnitte mit Kapselmerkmalen 36 und/oder optisch erkennbaren Merkmalen 34. Der Bereich zwischen den Kapselmerkmalen 36 und/oder optisch detektierbaren Merkmalen 34 kann frei von jeglichen Kapselmerkmalen 36 und/oder optisch detektierbaren Merkmalen 34 sein. Es kann eine beliebige Anzahl dieser diskreten oder teilweisen Abschnitte von Kapselmerkmalen 36 und/oder optisch detektierbaren Merkmalen 34 geben (zwei oder mehr, drei oder mehr, vier oder mehr, usw.). Diese Teilabschnitte können direkt auf der Unterseite 30 des Flansches 26 ausgebildet sein oder in einem nachfolgenden Druck- oder Applikationsverfahren darauf aufgebracht werden, oder sogar wie ein Ring, wie oben in den Fig. 6B, 7B beschrieben.

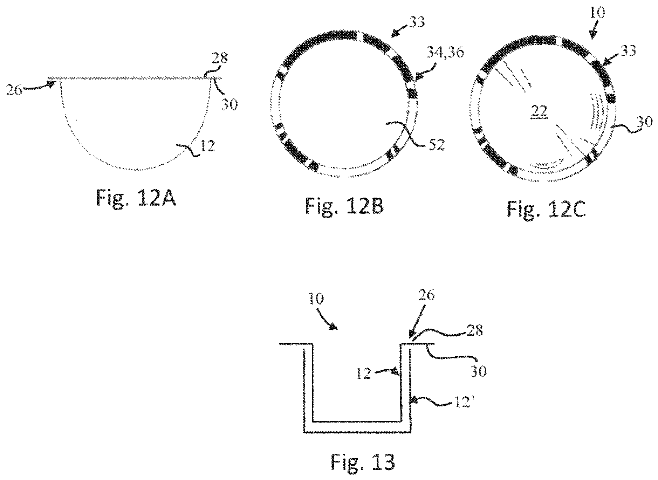

In **Figur 12C** ist eine schematische Aufsichtsdarstellung (Sicht auf die der Deckelfolie 33 abgewandten Untereite (Kapselboden 22) der Portionskapsel 10) einer Portionskapsel 10 zur Zubereitung eines Getränks gemäß einer elften Variante offenbart.

Die elfte Variante zeichnet sich dadurch aus, dass der Flansch 26 zumindest teilweise optisch transparent ausgebildet ist und das optisch detektierbare Merkmal 34 im Bereich des optisch transparenten Flansches 26 angeordnet ist.

Das optisch detektierbare Merkmal 34, 36 ist insbesondere auf einer dem Kapseldeckel 33 zugewandten Seite des Flansches 26 angeordnet oder auf einer dem Flansch 26 zugewandten Seite des Kapseldeckels 33 angeordnet oder auf einem zwischen dem Kapseldeckel 33 und dem Flansch 33 angeordneten Zusatzelement (insbesondere ein Ring 44) angeordnet.

In allen drei Fällen ist das optisch detektierbare Merkmal 34 durch den optisch transparent ausgebildeten Flansch 26 detektierbar. Gleichzeitig ist das optisch detektierbare Merkmal 34, 36 vor äußeren Umwelteinflüssen geschützt. Das Basiselement 12 kann insbesondere nahezu vollständig optisch transparent ausgebildet sein.

Denkbar wäre alternativ auch, dass das Basiselement 12 zweiteilig aus einem Basisteil und einem Flanschteil aufgebaut ist, wobei nur das Flanschteil optisch transparent ausgebildet ist, wobei das Basisteil und das Flanschteil miteinander verbunden sind.

In Figur 12B ist der Kapseldeckel 33 abgebildet, wobei die dem Basiselement 12 zugewandte Unterseite 52 des Kapseldeckels 33 zu sehen ist. In dieser Variante ist das optisch detektierbare Merkmal 34, 36 im Randbereich dieser Unterseite 52 angeordnet, vorzugsweise aufgedruckt.

Das optisch detektierbare Merkmal 34, 36 umfasst hier einen maschinenauslesbaren Code, vorzugsweise einen eindimensionalen oder mehrdimensionalen Bit- oder Barcode.

In Figur 12A ist das Basiselement 12 illustriert, welches entweder vollständig transparent ausgebildet ist oder lediglich einen transparenten Flansch 26 aufweist. Zur Ausbildung des transparenten Basiselements 12 ist das Basiselement 12 insbesondere aus einem transparenten Kunststoff, beispielsweise einer transparenten Folie gefertigt.

Fig. 12A zeigt einen Körper oder ein Basiselement 12 und einen Flansch 26 der Portionskapsel. Das Basiselement 12 und/oder der Flansch 26 können zumindest teilweise transparent, lichtdurchlässig, durchsichtig oder eine Kombination davon sein. In Abb. 12B ist ein Deckel 33 dargestellt. Der Deckel umfasst eine Oberseite und eine gegenüberliegende Unterseite 52. Der Deckel 33 und insbesondere die Unterseite 52 des Deckels 33 weisen ein oder mehrere Kapselmerkmale 36 und/oder optisch erkennbare Merkmale 34 auf. Fig. 12B zeigt die zusammengebaute Portionskapsel 10 mit Blick auf die Unterseite des Körpers oder des Basiselements 12. Die Unterseite 52 des Deckels 33 ist so angeordnet, dass sie der Oberseite 28 des Flansches 26 zugewandt ist, so dass, wenn die Portionskapsel 10 von unten betrachtet wird, die ein oder mehreren Kapselmerkmale 36 und/oder optisch erfassbaren Merkmale 34 durch den zumindest teilweise transparenten, durchscheinenden oder durchsichtigen Flansch 26 oder die Unterseite 30 des Flansches 26 sichtbar sind. Dementsprechend wären die ein oder mehreren Kapselmerkmale 36 und/oder optisch erkennbaren Merkmale 34 vor Flüssigkeitsspritzern oder -spritzern und/oder vor Beschädigungen während der Herstellung, des Versands und/oder der Handhabung geschützt.

In **Figur 13** ist eine schematische Schnittbildansicht einer Portionskapsel 10 zur Zubereitung eines Getränks gemäß einer zwölften Variante offenbart.

Die zwölfte Variante zeichnet sich gegenüber den übrigen Varianten insbesondere dadurch aus, dass die Portionskapsel 12 weiteres Basiselement 12' (auch als äußeres Basiselement 12' bezeichnet) aufweist, welches das Basiselement 12 (auch als inneres Basiselement 12) zumindest teilweise umgibt. Das weitere Basiselement 12' weist dabei insbesondere einen weiteren Hohlraum 20' auf, in welchem das Basiselement 12 teilweise angeordnet ist. Dabei ist das Basiselement (12) vorzugsweise derart weit innerhalb des weiteren Hohlraums 20' angeordnet ist, dass sich eine weitere Kapselwandung 14' des weiteren Basiselements 12' insbesondere parallel zur Kapselwandung 14 des Basiselements 12 bis zum Flansch (26) erstreckt.

Das weitere Basiselement 12' ist vorzugsweise flanschfrei ausgebildet, damit der Flansch 26 des inneren Basiselements 12 nicht überdeckt wird und somit das an der Unterseite 30 des Flansches 26 angeordnete optisch detektierbare Merkmal 34, 36 auslesbar ist und das Sichtfeld nicht verdeckt wird.

Vorteilhafterweise kann das weitere Basiselement 12' als form- oder strukturgebendes Basisteil ausgebildet werden, während nur das innere Basiselement 12, welches den Flansch 26 mit dem optisch detektierbaren Merkmal 34, 36 aufweist, mit Blick auf ein günstiges Herstellungsverfahren optimiert werden kann.

Vorzugsweise ist das Material im Bereich der Kapselwandung 14 des inneren Basiselements 12 weicher, weniger steif oder dünner als im Bereich der Kapselwandung 14' von dem äußeren Basiselement 12' ausgebildet.

Es ist auch denkbar, dass das Material des inneren Basiselements 12 gasundurchlässiger als das Material des äußeren Basiselements 12' ausgebildet ist.

Das innere Basiselement 12 und das äußere Basiselement 12' sind im Bereich der Kapselwandungen 14 vorzugsweise flächig miteinander verklebt, verpresst oder verschweißt.

Das innere Basiselement 12 und das äußere Basiselement 12' können aus dem gleichen oder aus unterschiedlichen Materialien gefertigt sein.

In Abb. 13 ist eine Portionskapsel 10 dargestellt. Die Portionskapsel 10 hat einen Körper oder ein Basiselement 12 und ein äußeres Körper- oder Basiselement 12'. Der äußere Körper oder das Basiselement 12' kann im Wesentlichen derselbe sein wie der Körper oder das Basiselement 12, so dass alle Bemerkungen zum Basiselement 12 auch für das äußere Basiselement 12' gelten. Das Basiselement 12 ist so bemessen, dass es in das äußere Basiselement 12' passt. Das Basiselement 12 hat einen Flansch 26, und das äußere Basiselement 12' ist frei von einem Flansch. Die beiden Basiselemente 12, 12' können durch Presspassung oder durch ein Befestigungsmittel oder eine Befestigungsmethode (Schweißen, Kleben usw.) miteinander verbunden werden. Jede der Oberflächen des Basiselements 12 und/oder des Basiselements 12' kann eines oder mehrere der hierin offenbarten Kapselmerkmale 36 und/oder optisch erkennbaren Merkmale 34 aufweisen.

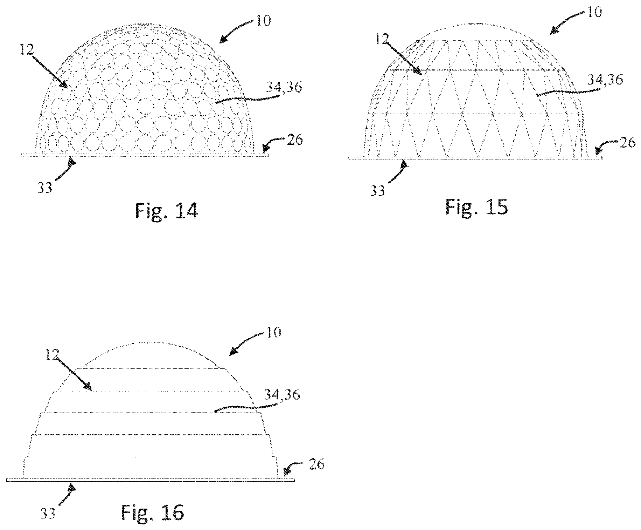

In **Figuren 14, 15 und 16** sind schematische Seitenansichten von Portionskapseln 10 zur Zubereitung eines Getränks gemäß einer dreizehnten, vierzehnten und fünfzehnten Variante offenbart.

Bei diesen drei Varianten sind die optisch detektierbaren Merkmale 34, 36 in Form von dreidimensionalen Strukturierungen der Kapselwandung 14 ausgebildet. In der dreizehnten Variante umfasst die Strukturierung sphärische Formen, in der vierzehnten Varianten Rautenformen und in der fünfzehnten Variante umlaufende Vorsprünge.

In den Abbildungen 14, 15 und 16 ist eine Portionskapsel 10 dargestellt. Die Portionskapsel 10 umfasst einen Körper oder ein Basiselement 12, einen Flansch 26 und einen Deckel 33. Der Körper oder das Basiselement 12, die Seitenwand 14 (Innen- und/oder Außenflächen), der Flansch 26, der Deckel 33 oder eine Kombination davon weisen ein oder mehrere Kapselmerkmale 36 und/oder optisch erkennbare Merkmale 34 auf. In Fig. 14 kann es sich bei dem einen oder den mehreren Kapselmerkmalen 36 und/oder optisch detektierbaren Merkmalen 34 um Grübchen, Erhebungen, Vertiefungen oder Kerben handeln. Das eine oder die mehreren Kapselmerkmale 36 und/oder optisch erfassbaren Merkmale 34 können den Dimples eines Golfballs ähneln. In Fig. 15 können das eine oder die mehreren Kapselmerkmale 36 und/oder optisch detektierbaren Merkmale 34 aus einer Vielzahl von Rauten, Rauten, dreieckigen oder quadratischen ebenen Flächen bestehen. In Fig. 16 können das eine oder die mehreren Kapselmerkmale 36 und/oder die optisch erkennbaren Merkmale 34 eine oder mehrere Rillen, Stufen, Rippen oder Ringe sein. In Fig. 16 können das eine oder die mehreren Kapselmerkmale 36 und/oder die optisch erkennbaren Merkmale 34 eine oder mehrere Spiralen, Bögen oder gekrümmte Merkmale sein.

## Patentansprüche

1. Portionskapsel (10) zur Zubereitung eines Getränks mit Hilfe einer Getränkeherstellungsmaschine, wobei die Portionskapsel (10) ein Basiselement (12) mit einem Hohlraum (20) zum Aufnehmen eines Getränkerohmaterials und einen den Hohlraum (20) verschließenden Kapseldeckel (33) aufweist, wobei das Basiselement (12) einen Kapselboden (22), einen umlaufenden Flansch (26) und eine sich von dem Kapselboden (22) zum umlaufenden Flansch (26) erstreckende Kapselwandung (14) umfasst, wobei der Kapseldeckel (33) an dem Flansch (26) befestigt ist, wobei die Portionskapsel (10) ein insbesondere von einem Detektor der Getränkeherstellungsmaschine optisch detektierbares Merkmal (34) aufweist, welches an einer dem Kapseldeckel (33) abgewandten Seite des Flansches (26) angeordnet ist, **dadurch gekennzeichnet, dass** die Portionskapsel (10) ein weiteres Basiselement (12') aufweist, welches das Basiselement (12) zumindest teilweise umgibt.

2. Portionskapsel (10) nach Anspruch 1, wobei das weitere Basiselement (12') einen weiteren Hohlraum (20') aufweist, in welchem das Basiselement (12) teilweise angeordnet ist.

3. Portionskapsel (10) nach Anspruch 2, wobei das Basiselement (12) so weit innerhalb des weiteren Hohlraums (20') angeordnet ist, dass sich eine weitere Kapselwandung (14') des weiteren Basiselements (12') insbesondere parallel zur Kapselwandung (14) des Basiselements (12) bis zum Flansch (26) erstreckt.

4. Portionskapsel (10) nach einem der vorhergehenden Ansprüche, wobei das weitere Basiselement (12') flanschfrei ausgebildet ist.

5. Portionskapsel (10) nach einem der vorhergehenden Ansprüche, wobei das Material im Bereich der Kapselwandung (14) des Basiselements (12) weicher, weniger steif oder dünner als im Bereich der Kapselwandung (14') von dem weiteren Basiselement (12') ausgebildet ist.

6. Portionskapsel (10) nach einem der vorhergehenden Ansprüche, wobei das Material des Basiselements (12) gasundurchlässiger als das Material des weiteren Basiselements (12') ausgebildet ist.

7. Portionskapsel (10) nach einem der vorhergehenden Ansprüche, wobei das Basiselement (12) und das weitere Basiselement (12') im Bereich der Kapselwandungen (14) flächig miteinander verklebt oder verschweißt sind.

8. Portionskapsel (10) nach einem der vorhergehenden Ansprüche, wobei das Basiselement (12) und das weitere Basiselement (12') aus den gleichen oder unterschiedlichen Materialien gefertigt sind.

9. Portionskapsel (10) nach einem der vorhergehenden Ansprüche, wobei das optisch detektierbare Merkmal (34) ein maschinenauslesbarer Code, vorzugsweise ein eindimensionaler oder mehrdimensionaler Bit- oder Barcode ist.

10. Verwendung einer Portionskapsel (10) nach einem der vorhergehenden Ansprüche zur Zubereitung eines Getränks mit Hilfe einer Getränkeherstellungsmaschine.

## Claims

1. Portion capsule (10) for preparing a beverage with the aid of a beverage production machine, wherein the portion capsule (10) has a base element (12) with a cavity (20) for receiving a raw beverage material and a capsule lid (33) closing the cavity (20), wherein the base element (12) comprises a capsule base (22), a circumferential flange (26) and a capsule wall (14) extending from the capsule base (22) to the circumferential flange (26), wherein the capsule lid (33) is attached to the flange (26), wherein the portion capsule (10) has a feature (34) which can be optically detected, in particular by a detector of the beverage production machine, and which is arranged on a side of the flange (26) facing away from the capsule lid (33), **characterised in that** the portion capsule (10) has a further base element (12') which at least partially surrounds the base element (12).

2. portion capsule (10) according to claim 1, wherein the further base element (12') has a further cavity (20') in which the base element (12) is partially arranged.

3. portion capsule (10) according to claim 2, wherein the base element (12) is arranged so far inside the further cavity (20') that a further capsule wall (14') of the further base element (12') extends in particular parallel to the capsule wall (14) of the base element (12) as far as the flange (26).

4. portion capsule (10) according to one of the preceding claims, wherein the further base element (12') is formed without a flange.

5. portion capsule (10) according to one of the preceding claims, wherein the material in the region of the capsule wall (14) of the base element (12) is softer, less rigid or thinner than in the region of the capsule wall (14') of the further base element (12').

6. portion capsule (10) according to one of the preceding claims, wherein the material of the base element (12) is designed to be more impermeable to gas than the material of the further base element (12').

7. portion capsule (10) according to one of the preceding claims, wherein the base element (12) and the further base element (12') are glued or welded together over a large area in the region of the capsule walls (14).

8. portion capsule (10) according to one of the preceding claims, wherein the base element (12) and the further base element (12') are made of the same or different materials.

9. portion capsule (10) according to one of the preceding claims, wherein the optically detectable feature (34) is a machine-readable code, preferably a one-dimensional or multidimensional bit or bar code.

10. use of a portion capsule (10) according to one of the preceding claims for the preparation of a beverage by means of a beverage making machine.

## Revendications

1. Capsule à portions (10) pour la préparation d'une boisson au moyen d'une machine de fabrication de boissons, la capsule à portions (10) comprenant un élément de base (12) avec une cavité (20) pour recevoir une matière première de boisson et un couvercle de capsule (33) fermant la cavité (20), l'élément de base (12) comprenant un fond de capsule (22), un rebord périphérique (26) et une paroi de capsule (14) s'étendant du fond de capsule (22) au rebord périphérique (26), le couvercle de capsule (33) étant fixé à la bride (26), la capsule de portion (10) présentant une caractéristique (34) détectable optiquement, en particulier par un détecteur de la machine de fabrication de boissons, qui est disposée sur un côté de la bride (26) opposé au couvercle de capsule (33), **caractérisée en ce que** la capsule de portion (10) présente un autre élément de base (12') qui entoure au moins partiellement l'élément de base (12).

2. capsule de portion (10) selon la revendication 1, dans laquelle l'autre élément de base (12') présente une autre cavité (20') dans laquelle l'élément de base (12) est partiellement disposé.

3. capsule de portion (10) selon la revendication 2, dans laquelle l'élément de base (12) est disposé à l'intérieur de l'autre cavité (20') jusqu'à ce qu'une autre paroi de capsule (14') de l'autre élément de base (12') s'étende en particulier parallèlement à la paroi de capsule (14) de l'élément de base (12) jusqu'à la bride (26).

4. capsule-portion (10) selon l'une des revendications précédentes, dans laquelle l'autre élément de base (12') est réalisé sans bride.

5. capsule de portion (10) selon l'une des revendications précédentes, dans laquelle le matériau est plus souple, moins rigide ou plus mince dans la zone de la paroi de capsule (14) de l'élément de base (12) que dans la zone de la paroi de capsule (14') de l'autre élément de base (12').

6. Capsule de portionnement (10) selon l'une des revendications précédentes, dans laquelle le matériau de l'élément de base (12) est conçu pour être plus imperméable aux gaz que le matériau de l'autre élément de base (12').

7. Capsule de portionnement (10) selon l'une des revendications précédentes, dans laquelle l'élément de base (12) et l'autre élément de base (12') sont collés ou soudés à plat l'un à l'autre dans la zone des parois de la capsule (14).

8. Capsule de portionnement (10) selon l'une quelconque des revendications précédentes, dans laquelle l'élément de base (12) et l'autre élément de base (12') sont fabriqués dans les mêmes matériaux ou dans des matériaux différents.

9. Capsule de portionnement (10) selon l'une des revendications précédentes, dans laquelle la caractéristique optiquement détectable (34) est un code lisible par une machine, de préférence un code binaire ou un code à barres unidimensionnel ou multidimensionnel.

10. Utilisation d'une capsule-portion (10) selon l'une quelconque des revendications précédentes pour la préparation d'une boisson à l'aide d'une machine de fabrication de boissons.
